# EUROPÄISCHE PATENTSCHRIFT

(11) **EP 1 601 944 B1**
(45) Veröffentlichungstag und Bekanntmachung des Hinweises auf die Patenterteilung: **09.05.2007**
(21) Anmeldenummer: 04716207.8
(22) Anmeldetag: 02.03.2004
(51) Int. Cl.: G01M 1/04

(54) **VERFAHREN UND VORRICHTUNG ZUM AUSWUCHTEN VON ZAPFENLOSEN ROTOREN**
METHOD AND DEVICE FOR BALANCING JOURNAL-LESS ROTORS
PROCEDE ET DISPOSITIF POUR EQUILIBRER DES ROTORS SANS TOURILLON

(30) Priorität: 10.03.2003 DE 10310725
(43) Veröffentlichungstag der Anmeldung: 07.12.2005
(73) Patentinhaber: Schenck RoTec GmbH, 64293 Darmstadt (DE)
(72) Erfinder: THELEN, Dieter, 64397 Modautal (DE)
(74) Vertreter: Haar, Lucas Heinz Jörn
(86) Internationale Anmeldenummer: PCT/DE2004/000389
(87) Internationale Veröffentlichungsnummer: WO 2004/081512

(56) Entgegenhaltungen:
- DE-A- 4 441 951
- US-A- 3 570 278
- US-A- 4 543 825

## Beschreibung

Die Erfindung betrifft ein Verfahren zum Auswuchten von zapfenlosen Rotoren nach dem Oberbegriff des Patentanspruchs 1 und eine Lagerung mit einem Lagerdorn zum Lagern eines zapfenlosen, eine Bohrung aufweisenden Rotors in einer Auswuchteinrichtung nach dem Oberbegriff des Patentanspruchs 7.

Einen Rotor mit Zapfen kann man in Bezug auf seine Lagerstellen, die an den Zapfen angeordnet sind, genau auswuchten. Auszuwuchtenden Rotoren ohne eigene Lagerstellen, die beim Auswuchten auf eine Hilfswelle aufgespannt werden, bereiten Probleme in Hinblick auf die erzielbare Auswuchtgüte.

Den Oberbegriffen der Patentansprüche 1 und 6 liegt der Stand der Technik gemäß US-A-4,543,825 zugrunde. Hieraus ist ein Verfahren und eine Vorrichtung zum Auswuchten von Rotoren ohne Zapfen bekannt, umfassend eine federnd gelagerte Schwingbrücke, auf der stehend ein nicht drehbarer Lagerdom angeordnet ist, der eine zentrale Zuführleitung und davon in mehreren radialen Ebenen abzweigende Durchgänge hat. Am Fuß des Lagerdorns ist eine zur Achse des Lagerdorns rechtwinklige Platte zur Bildung eines Axiallagers vorgesehen, die ebenfalls mit in der Lagerfläche mündenden Durchgängen versehen ist. Die zentrale Zuführleitung und die Durchgänge in der Platte werden über geeignete Anschlüsse mit einem geeigneten Fluid, beispielsweise Druckluft, Wasser oder Öl, gespeist und bilden statische Lagerbereiche, die den auszuwuchtenden Rotor in radialer und axialer Richtung abstützen. Einrichtungen zur Abführung des den Lagerbereichen zugeführten Fluids sind nicht vorgesehen und bei Verwendung von Druckluft als Lagerfluid auch nicht erforderlich. Wird hingegen der Lagerung eine Flüssigkeit zugeführt, so kann die Benetzung des Rotors durch die an den Lagerspalten austretende Flüssigkeit zu falschen Meßergebnissen führen.

Aus DE 44 41 951 ist ein Balancierdorn zur Aufnahme und Führung eines auszuwuchtenden Hohlkörpers bekannt, bei dem zwischen dem Schaft des Balancierdorns und einem axialen Anschlag statische Luftlager angeordnet sind, die mit eine im Inneren des Balancierdorns ausgebildeten Luftleitung verbunden sind. Das statische Luftlager des axialen Anschlags besteht aus einer Kugelkalotte und einer von dieser getragenen Hohlkugel mit einer Planlagerstelle zur Abstützung des Rotors.

Der Erfindung liegt die Aufgabe zugrunde, ein Verfahren und eine Vorrichtung zum Auswuchten von zapfenlosen Rotoren zu schaffen, mit denen auch die Unwucht von Rotoren mit Lagermöglichkeiten auf nur einem Teil ihrer axialen Erstreckung mit hoher Genauigkeit ermittelt werden kann.

Erfindungsgemäß wird diese Aufgabe mit den Merkmalen der Patentansprüche 1 und 6 gelöst.

Es lassen sich erstmals zapfenlose Rotore, bei denen nur ein Teil ihrer Längserstreckung für die Lagerung zur Verfügung steht, mit hoher Genauigkeit auswuchten, da mit der Erfindung eine große Lagersteifigkeit und eine genaue Fixierung der Rotorachse gewährleistet ist und der Rotor sehr ruhig läuft. Durch die erfindungsgemäße Flüssigkeitslagerung ist darüberhinaus die erforderliche Trennung der Unwucht in Bezug auf die Ausgleichsebenen gewährleistet.

Dadurch, daß die Zu- und Abführung größtenteils über das Dorninnere vorgenommen wird, ist eine Beeinträchtigung der Meßgenauigkeit durch die Lagerflüssigkeit nicht gegeben.

Nach der Erfindung ist vorgesehen, daß die Abstützung sowohl im ersten als auch im zweiten Lagerbereich mittels Flüssigkeit, vorzugsweise einer Öl- oder ölhaltigen Flüssigkeit erfolgt, was das Zu- und Abführen des verwendeten Fluids vereinfacht.

Die axiale Abstützung des Rotors im zweiten Lagerbereich erfolgt vorteilhaft hydrodynamisch, da dabei die Versorgung mit Lagerfluid relativ einfach vorgenommen werden kann.

Dadurch, daß die Abstützung im zweiten Lagerbereich an sphärisch ausgebildeten Lagerflächen vorgenommen wird, können mögliche Planschlagfehler der axialen Lagerfläche nicht zu einer Verschiebung der Rotorachse führen. Durch die Winkelbeweglichkeit der sphärischen Lagerung können Planschlagfehler ausgeglichen werden, ohne daß ein Zwangsmoment auf den Rotor ausgeübt wird.

Die Erfindung wird nachfolgend anhand von Ausführungsbeispielen näher erläutert. Es zeigen:
- Figur 1: eine Lagerung mit einem Lagerdorn für einen eine Sacklochbohrung aufweisenden Rotor in einer Auswuchteinrichtung in schematischer Darstellung,
- Figur 2: eine erste Ausführungsform des Lagerdorns in einer Schnittdarstellung längs der Linie II - II in Figur 3,
- Figur 3: eine Draufsicht auf den Lagerdorn nach Figur 2,
- Figur 4: eine weitere Schnittdarstellung des Lagerdorns nach Figur 2,
- Figur 5: eine weitere Ausführungsform des Lagerdorns in einer Schnittdarstellung,
- Figur 6: einen Querschnitt durch den Lagerdorn nach Figur 5 und
- Figur 7: eine weitere Schnittdarstellung des Lagerdorns nach Figur 5.

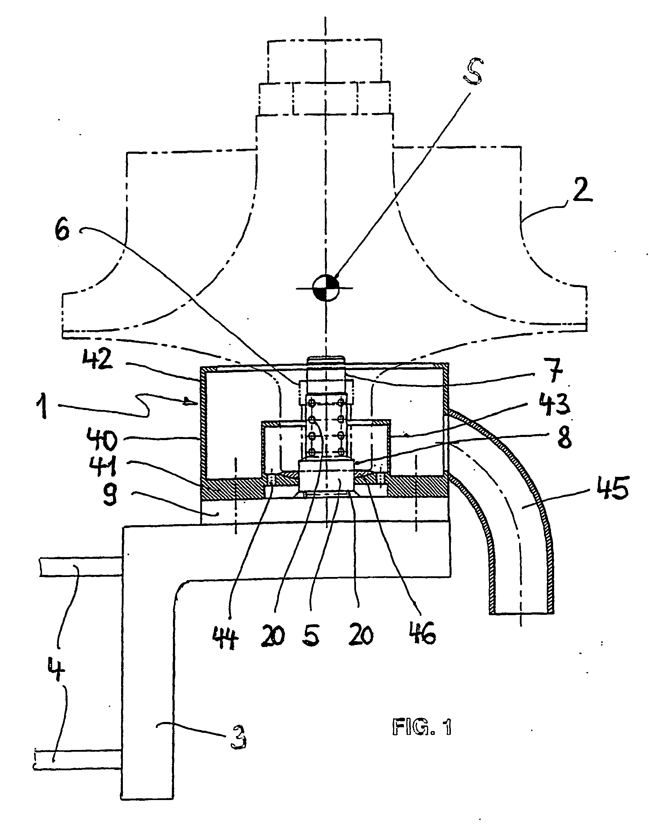

Die in Figur 1 dargestellte Lagerung 1 für einen zu untersuchenden Rotor 2, der in Figur 1 in strichpunktierten Linien dargestellt ist, ist an einer Schwingbrücke 3 einer Auswuchteinrichtung befestigt. Die Schwingbrücke 3 ist in üblicher Weise über z.B. vier Stützfedern 4, von denen hier nur zwei dargestellt sind, schwingfähig gegen den Rahmen der Auswuchteinrichtung abgestützt. Der Rotor 2 wird von einem Antrieb, der hier nicht näher dargestellt ist, in Rotation versetzt. Unwuchtinduzierte Schwingungen der Schwingbrücke 3 werden gemessen und zur Bestimmung der am Rotor 2 auszugleichende Unwucht herangezogen.

Die Lagerung weist einen Lagerdorn 5 auf, auf den der zu untersuchende bzw. auszuwuchtende Rotor 2 rotierbar aufgebracht wird.

Im Ausführungsbeispiel gemäß Figur 1 weist der Rotor 2 eine nicht durchgehende zentrale Rotorbohrung 6, also eine Sacklochbohrung auf, mittels der die Lagerung auf dem vertikal angeordneten Lagerdorn 5 erfolgt. Der Schwerpunkt S des Rotors 2 liegt in Achsrichtung außerhalb der Erstreckung der Sacklochbohrung, also außerhalb des Lagerbereichs. Die Sacklochbohrung ist gestuft und weist vier Abschnitte unterschiedlichen Durchmessers auf. Der von der unteren Rotorstirnseite ausgehende erste Abschnitt ist ebenso wie der am Ende der Sacklochbohrung liegende vierte Abschnitt zur Abstützung des Rotors 2 mittels Lagerungsfluid in einem ersten Bereich in radialer Richtung auf dem Lagerdorn 5 vorgesehen. Die Abstützung des Rotors 2 mittels Lagerungsfluid in einem zweiten Bereich in axialer Richtung erfolgt über die untere Rotorstirnseite und zugeordnete Bereiche oder Baueinheiten des Lagerdorns 5. Als Lagerungsfluid wird im ersten und zweiten Lagerbereich in diesem Ausführungsbeispiel Öl oder eine ölhaltige Flüssigkeit oder ein anderes zur Flüssigkeitsschmierung geeignetes Fluid verwendet.

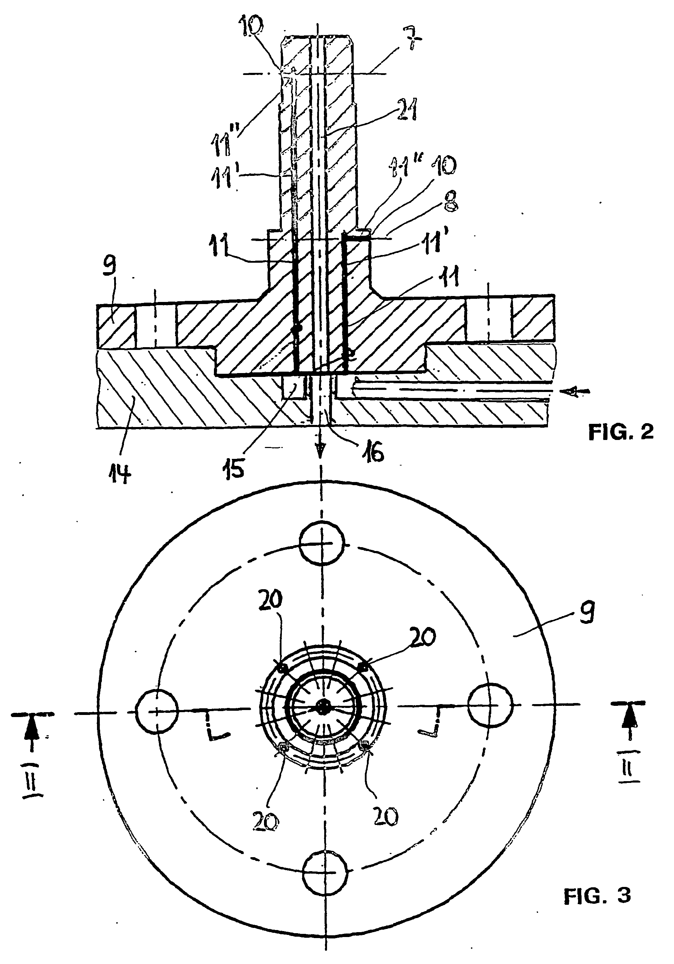

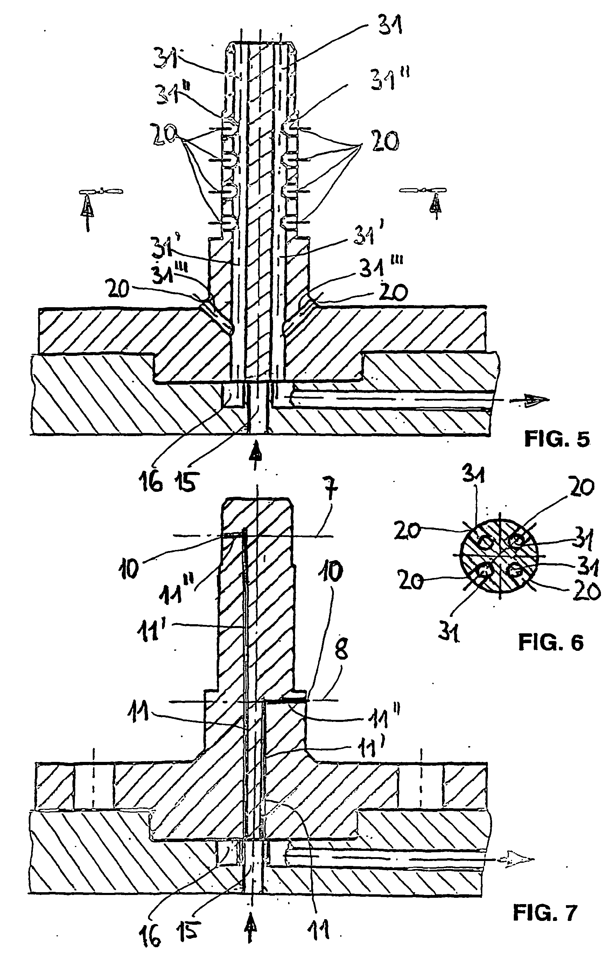

Der Lagerdom 5 weist an seiner Oberfläche erste Öffnungen 10 (Figur 2, Figur 7) zum Durchtritt von Lagerungsfluid auf, die mit Fluid-Zuführleitungen 11 im Lagerdorninneren verbunden sind, sowie zweite Öffnungen 20 zum Durchtritt von Lagerungsfluid, die mit Fluid-Abführleitungen 21 im Lagerdorninneren verbunden sind. Die ersten Öffnungen 10 liegen in zwei axial beabstandeten Lagerebenen 7, 8, die dem ersten und vierten Abschnitt der Sacklochbohrung des Rotors 2 zugeordnet sind und in denen der Rotor 2 in radialer Richtung abgestützt wird. Der Lagerdorn 5 weist an einem Ende einen Bund 9 auf, mit dem er auf der Schwingbrücke 3 befestigt ist.

In der in den Figuren 2 bis 4 dargestellten Ausgestaltung des Lagerdorns 5 erfolgt die Fluidzufuhr für jede der beiden Lagerebenen 7, 8 über jeweils vier äquidistant auf einem Teilkreis verteilte und parallel zur Lagerdornachse verlaufende Zuführ-Leitungsabschnitte 11', die mit radial verlaufenden und in den vier ersten Öffnungen 10 pro Lagerebene 7, 8 endenden Zuführ-Leitungsabschnitten 11" verbunden sind. Die insgesamt acht axial verlaufenden Zuführ-Leitungsabschnitte 11' enden in einer an der unteren Stirnfläche des Lagerdorns 5 angeordneten ersten Fluidkammer 15 die vorzugsweise als Ringkammer ausgebildet ist. Die Ringkammer ist mit einer Fluidzufuhr verbunden und befindet sich in einem abgedichtet mit dem Lagerdom 5 verbundenen Kammerbauteil 14, das seinerseits einen Teil der Schwingbrücke 3 bildet. Lagerdorn 5 und Kammerbauteil 14 können selbstverständlich auch einteilig ausgebildet sein.

Die parallel zur Lagerdornachse verlaufenden Zuführ-Leitungsabschnitte 11' sind mit Drosselabschnitten versehen, die einen kleinen Querschnitt zwecks Drosselwirkung auf das Fluid aufweisen, wobei sich die Drosselwirkung auf einfache Weise neben dem gewählten Querschnitt noch über die Länge der Drosselstrecke einstellen läßt. Ferner kann vorgesehen werden, daß auch die zugeordneten radial verlaufenden Leitungsabschnitte 11" noch eine Drosselwirkung aufweisen.

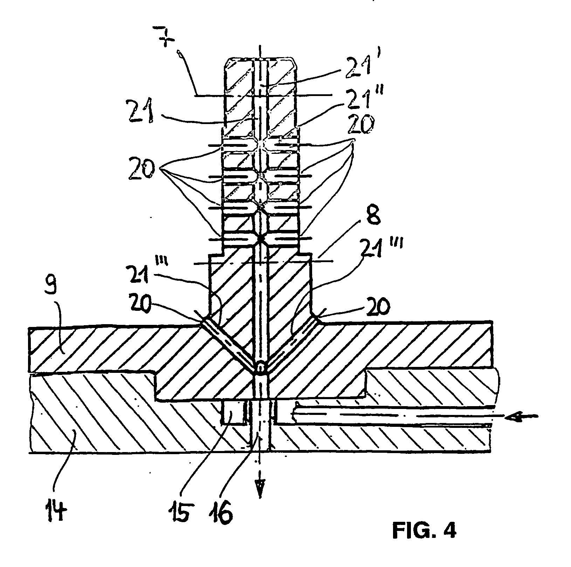

Zur Fluidabfuhr über die Öffnungen 20 ist bei dieser Ausgestaltung des Lagerdorns eine durchgehende Zentralbohrung 21' als Teil der Fluid-Abführleitung 21 vorgesehen, in die in mehreren Querschnittsebenen jeweils mehrere Radialbohrungen 21" münden, wie dies aus Figur 4 näher ersichtlich ist. Diese Querschnittsebenen liegen zwischen den beiden Lagerebenen 7, 8. Im zweiten Lagerbereich, der der Abstützung des Rotors in axialer Richtung dient, befinden sich mehrere Öffnungen 20 zur Fluidabfuhr, die über radial und schräg verlaufende Fluidkanäle 21''' mit der Zentralbohrung 21' in Verbindung stehen. Die Zentralbohrung 21' endet in einer an der unteren Stirnfläche des Lagerdorns 5 angeordneten zweiten Fluidkammer 16, die als Zentralkammer ausgebildet ist. Die Zentralkammer ist mit einer Fluidabsaugung verbunden und befindet sich wie die Ringkammer in dem abgedichtet mit dem Lagerdorn 5 verbundenen Kammerbauteil 14.

In einer weiteren, in den Figur 5 bis 7 dargestellten Ausgestaltung des Lagerdorns 5 erfolgt die Fluidzufuhr für jede der beiden Lagerebenen 7, 8 auch über jeweils vier äquidistant auf einem Teilkreis verteilte und parallel zur Lagerdornachse verlaufende Zuführ-Leitungsabschnitte 11', die mit radial verlaufenden Zuführleitungsabschnitten 11" verbunden sind. Im Unterschied zu der zuvor beschriebenen Ausgestaltung enden die axialen Zuführleitungsabschnitte 11' in der Zentralkammer, die in diesem Fall die erste Fluidkammer 15 zur Fluidzufuhr bildet. Die Einstellung der Drosselwirkung erfolgt wie bei der zuvor beschriebenen Ausgestaltung.

Zur Fluidabfuhr ist bei dieser Ausgestaltung jedoch keine Zentralbohrung vorgesehen, die mit allen Fluidabführ-Öffnungen 20 in Verbindung steht. Statt dessen sind vier äquidistant auf einem Teilkreis verteilte parallel zur Dornachse verlaufende Durchgangsbohrungen 31 vorgesehen, die in mehreren Querschnittsebenen mit jeweils einer Öffnung 20 am Lagerdornumfang in Verbindung stehen, wie dies aus den Figur 5 und 6 näher ersichtlich ist. Die jeweils einer Durchgangsbohrung 31 zugeordneten Öffnungen 20 liegen demnach hintereinander auf einer parallel zur Lagerdornachse verlaufenden Mantellinie. Ähnlich der zuvor beschriebenen Ausgestaltung befinden sich mehrere, in diesem Falle vier Öffnungen 20 zur Fluidabfuhr im zweiten Lagerbereich, von denen in diesem Fall jeweils eine über radial und schräg verlaufende Fluidkanäle 31''' mit der nächstliegenden Durchgangsbohrung 31 in Verbindung steht. Die vier Durchgangsbohrungen 31 enden in einer an der unteren Stirnfläche des Lagerdorns 5 angeordneten zweiten Fluidkammer 16, die als Ringkammer ausgebildet ist. Die Ringkammer ist mit einer Fluidabsaugung verbunden und befindet sich wie die Zentralkammer in dem abgedichtet mit dem Lagerdorn verbundenen Kammerbauteil 14.

Die Zuführ-Öffnungen 10 in den Lagerbereichen können in Zahl und Anordnung von den beschriebenen Ausführungen abweichen. Die Drosselwirkung wird in Abhängigkeit von Rotorform und Rotorgewicht sowie vom verwendeten Fluid festgelegt.

Die Zahl und Anordnung der Abführ-Öffnungen in den beschriebenen Ausgestaltungen ist beispielhaft. Sie richtet sich nach dem verwendeten Fluid und der Ausgestaltung des Rotors und der Lagerung.

Der Lagerdom 5 ist an seinem den Bund 9 aufweisenden Ende mit einer Baueinheit 40 verbunden, die der Abstützung des Rotors 2 in Axialrichtung und der Fluidversorgung dieser Axialabstützung dient. Diese Baueinheit 40 weist eine Grundplatte 41 auf, die mit dem Bund 9 des Lagerdorns 5 auf der dem Lagerdorn 5 zugewandten Bundseite fest verbunden ist. Die Grundplatte bildet den Boden von zwei Gehäusetöpfen 42, 43, nämlich einem ersten äußeren Gehäusetopf 42 und einem zweiten Gehäusetopf 43 kleineren Durchmessers, der koaxial im Inneren des ersten Gehäusetopfes 42 angeordnet ist. Die Höhe des äußeren Gehäusetopfes 42 ist so bemessen, daß der darin eintauchende Rotorabschnitt vom oberen Rand des Gehäusetopfes mit geringem radialen Abstand umschlossen wird. Die Höhe des zweiten inneren Gehäusetopfes 43 ist so bemessen, daß ein für eine hydrodynamische Fluidschmierung der Axialabstützung ausreichender Fluidvorrat im inneren Gehäusetopf 43 gesammelt wird.

Die Grundplatte 41 der Baueinheit 40 bildet zugleich die Lagerfläche für die axiale Abstützung des Rotors 2 mit seiner Rotorstirnfläche. Diese beiden Flächen sind so ausgebildet, daß eine hydrodynamische Lagerung des rotierenden Rotors 2 mittels des in dem inneren Gehäusetopf 43 gesammelten Lagerungsfluids gewährleistet ist. Die Grundplatte 41 bzw. der innere Gehäusetopf 43 weist Ausnehmungen 44 auf, über die der innere Gehäusetopf 43 mit den Fluid-Abführleitungen 21 bzw. 31 im Lagerdorn 5 in Verbindung steht. Über die Fluidabsaugung durch die Fluid-Abführleitungen 21 bzw. 31 kann der Pegel des Fluids im inneren Gehäusetopf 43 auf einfache Art reguliert werden. Überschüssiges Fluid gelangt vom äußeren Gehäusetopf 42 in einen Ablauf 45 zum Fluidreservoir.

In der in Figur 1 dargestellten Ausgestaltung hat der Rotor 2 eine ebene Stirnfläche. Um eine sphärische Lagerung auszubilden, ist zwischen der Lagerfläche der Grundplatte 41 und der Stirnfläche des Rotors 2 eine Lagerscheibe 46 angeordnet, die eine erste ebene Stirnfläche und eine zweite sphärische Stirnfläche aufweist, die mit einer komple-mentär ausgebildeten Vertiefung in der Grundplatte 41 die sphärische Lagerung bildet. Diese sphärische Lagerung liegt im Fluidvorrat im Inneren des Gehäusetopfes 43.

Statt der im Vorhergehenden beschriebenen Einrichtung zur hydrodynamischen Lagerung mit einer Flüssigkeit kann bei geeigneten Rotoren auch eine hydrostatische Axiallagerung mittels z.B., eines Luftlagers vorgesehen werden. Eine Fluidversorgung mit Luft als Fluid kann auf einfache Weise bis in die mit dem Bund 9 des Lagerdoms 5 verbundene Grundplatte 41 zu Öffnungen in der Lagerfläche der Grundplatte 41 geführt werden. Dabei kann der Bereich der axialen Lagerung so gestaltet werden, daß alternativ eine hydrodynamische Flüssigkeitslagerung oder eine hydrostatische Gas- oder Luftlagerung zum Einsatz kommen kann.

Die Orientierung der Lagerdornachse, z.B. vertikal, horizontal oder eine dazwischenliegende Orientierung, kann unter Berücksichtigung der Ausgestaltung der Auswuchteinrichtung und der Zuführweise der Rotoren, z.B. mit automatisierter Ein- und Auslagerung, festgelegt werden.

Die auf der Schwingbrücke angeordnete Lagerung ermöglicht alle Meßverfahren zur Bestimmung der Unwucht nach Lage und Größe. Die Abstützung der Schwingbrücke kann für unterkritischen oder überkritischen Betrieb ausgebildet sein.

Die Erfindung ist nicht eingeschränkt auf die Untersuchung von Rotoren mit Sacklochbohrungen. Es können alle Rotoren ohne eigene Lagerzapfen, die Sacklochbohrungen oder durchgehende Bohrungen aufweisen, wie beispielsweise Verdichterräder, Schwungräder etc. ausgewuchtet werden. Besonders geeignet ist die Erfindung für Rotoren, deren Schwerpunkt in axialer Richtung außerhalb des in der Rotorbohrung vorgesehenen Lagerbereichs liegt, was insbesondere für Rotoren mit Lagermöglichkeit auf nur einem Teil ihrer axialen Erstrechnung zutrifft.

## Patentansprüche

1. Verfahren zum Auswuchten von zapfenlosen Rotoren (2), bei dem der eine Bohrung (6) aufweisende Rotor (2) auf einem Lagerdorn (5) einer Auswuchteinrichtung angeordnet und zumindest teilweise über das Lagerdorninnere zugeführtes Fluid zwischen einander gegenüberliegende Rotor- und Lagerdornflächen gebracht wird und der Rotor (2) in Drehung versetzt wird, wobei unwuchtinduzierte Schwingungen des Lagerdorns (5) zur Bestimmung der Unwucht herangezogen werden, der Rotor (2) in einem ersten Lagerbereich in Radialrichtung und in einem zweiten Lagerbereich in Axialrichtung mittels einer Flüssigkeit abgestützt wird und die Abstützung im ersten Lagerbereich hydrostatisch ist, **dadurch gekennzeichnet, daß** der Rotor (2) in dem zweiten Lagerbereich hydrodynamisch mittels aus dem ersten Lagerbereich abgeführten und drucklos zugeführten Fluids abgestützt wird und daß die Abführung des Fluids zumindest teilweise über das Lagerdorninnere vorgenommen wird.

2. Verfahren nach Anspruch 1, **dadurch gekennzeichnet, daß** die Abstützung im ersten und zweiten Lagerbereich mittels einer Öl- oder ölhaltigen Flüssigkeit als Fluid vorgenommen wird.

3. Verfahren nach einem oder beiden der vorhergehenden Ansprüche, **dadurch gekennzeichnet, daß** die Abführung über das Lagerdorninnere und eine mit einem Behälter verbundene Abführleitung (45) vorgenommen wird.

4. Verfahren nach einem der vorhergehenden Ansprüche, **dadurch gekennzeichnet, daß** die Abstützung im ersten Lagerbereich durch mehrere zwischen Lagerdornumfangsfläche und Rotorbohrung gebildete Lagerstellen vorgenommen wird, wobei der Rotorschwerpunkt S in axialer Richtung außerhalb des Lagerbereichs liegt.

5. Verfahren nach einem der vorhergehenden Ansprüche, **dadurch gekennzeichnet, daß** die Abstützung im zweiten Lagerbereich über sphärisch ausgebildete Lagerflächen vorgenommen wird.

6. Lagerung mit einem Lagerdorn (5) zum Lagern eines zapfenlosen, eine Bohrung (6) aufweisenden Rotors (2) in einer Auswuchteinrichtung in zumindest einem ersten in Radialrichtung abstützenden, hydrostatischen Lagerbereich und einem zweiten in Axialrichtung abstützenden Lagerbereich, wobei der Lagerdom (5) erste Öffnungen (10) für den Durchtritt von Fluid aufweist und die ersten Öffnungen (10) mit Zuführleitungen (11) für das Fluid verbunden sind, **dadurch gekennzeichnet, daß** im Lagerdorn (5) zweite Öffnungen (20) vorgesehen sind, die mit Abführleitungen (21, 31) für das Fluid verbunden sind und daß der Rotor (2) im zweiten Lagerbereich hydrodynamisch abgestützt ist, wobei der zweite Lagerbereich von einem Gehäusetopf (43) umgeben ist, der zum Sammeln eines zur hydrodynamischen Fluidschmierung des zweiten Lagerbereichs ausreichenden Vorrats an zurückfließendem Fluid eingerichtet ist.

7. Lagerung nach Anspruch 6, **dadurch gekennzeichnet, daß** die ersten Öffnungen (10) an Lagerdomumfangsflächen zumindest im ersten und/oder zweiten Lagerbereich liegen.

8. Lagerung nach einem oder beiden der Ansprüche 6 und 7, **dadurch gekennzeichnet, daß** die ersten Öffnungen (10) in zwei axial beabstandeten Lagerebenen (7, 8) des Lagerdoms (5) liegen.

9. Lagerung nach einem der Ansprüche 6 bis 8, **dadurch gekennzeichnet, daß** die ersten Öffnungen (10) sowohl in zwei axial beabstandeten Lagerebenen (7, 8) des ersten Lagerbereichs vorgesehen sind als auch in einer Lagerebene des zweiten als Axiallager ausgebildeten Lagerbereichs.

10. Lagerung nach einem der Ansprüche 6 bis 9, **dadurch gekennzeichnet, daß** die zweiten Öffnungen (20) den Lagerebenen (7, 8) benachbart und/oder zwischen diesen angeordnet sind.

11. Lagerung nach einem der Ansprüche 6 bis 10, **dadurch gekennzeichnet, daß** die ersten (10) und zweiten Öffnungen (20) jeweils mit quer zur Lagerdornachse verlaufenden Leitungsabschnitten (11", 21", 21''', 31", 31''') und parallel zur Lagerdornachse verlaufenden Leitungsabschnitten (11', 21', 31') verbunden sind.

12. Lagerung nach Anspruch 11, **dadurch gekennzeichnet, daß** die quer und/oder parallel zur Lagerdomachse verlaufenden Leitungsabschnitte (11', 11 ") der Zuführleitungen Drosselabschnitte mit kleinem Querschnitt aufweisen.

13. Lagerung nach einem der Ansprüche 6 bis 12, **dadurch gekennzeichnet, daß** die parallel zur Lagerdornachse verlaufenden Leitungsabschnitte (11', 21', 31') der Zuführleitungen (11) bzw. der Abführleitungen (21, 31) jeweils in einer am Lagerdornende angeordneten Fluidkammer (15 bzw. 16) zur Fluidzuführung bzw. Fluidabsaugung münden.

14. Lagerung nach Anspruch 13, **dadurch gekennzeichnet, daß** die beiden Fluidkammern (15, 16) durch eine Zentralkammer und eine koaxiale Ringkammer gebildet sind.

15. Lagerung nach Anspruch 14, **dadurch gekennzeichnet, daß** die Fluidkarnmem (15, 16) in einem abgedichtet mit dem Lagerdorn (5) verbundenen Kammerbauteil (14) ausgebildet sind.

16. Lagerung nach einem der Ansprüche 6 bis 15, **dadurch gekennzeichnet, daß** vorzugsweise vier äquidistant am Lagerdornumfang verteilte Öffnungen (10, 20) pro Ebene vorgesehen sind.

17. Lagerung nach einem der Ansprüche 6 bis 16, **dadurch gekennzeichnet, daß** der Lagerdom (5) vertikal angeordnet ist und das den Lagerdom (5) aufnehmende Rotorende über eine sphärisch ausgebildete Lagerstelle am Lagerdorn (5) oder einer mit diesem verbundenen Baueinheit (40) abgestützt ist.

18. Lagerung nach Anspruch 17, **dadurch gekennzeichnet, daß** eine Lagerscheibe (46) zwischen Rotorende und Lagerdorn (5) oder einer mit dem Lagerdorn verbundenen Baueinheit (40) vorgesehen ist, die eine plane und eine kugelkalottenförmige Stirnfläche aufweist.

19. Lagerung nach einem oder beiden der vorhergehenden Ansprüche, **dadurch gekennzeichnet, daß** der Rotorendbereich mit der vorzugsweise sphärisch ausgebildeten Lagerstelle von einem Gehäusetopf (43) für Rückflußfluid umgeben ist.

20. Lagerung nach Anspruch 19, **dadurch gekennzeichnet, daß** der Gehäusetopf (43) von einem weiteren Gehäusetopf (42) umgeben ist und beide mit Abführleitungen (44, 45) versehen sind, von denen die des inneren Gehäusetopfes (43) über die Öffnungen (20) im Lagerdorn (5) mit einer Fluidabsaugung in Verbindung steht.

## Claims

1. Method of balancing journal-less rotors (2), in which the rotor (2) having a bore hole (6) is arranged on a bearing mandrel (5) of a balancing device and fluid that is at least partly delivered via the inside of the bearing mandrel is brought between rotor and bearing mandrel surfaces which are opposite each other, and the rotor (2) is put into rotation, imbalance-induced oscillations of the bearing mandrel (5) being used to determine the imbalance, the rotor (2) is supported in a first bearing region in the radial direction and in a second bearing region in the axial direction by means of a liquid and the support in the first bearing region is hydrostatical, **characterised in that** in the second bearing region the rotor (2) is supported hydrodynamically by means of fluid which is removed from the first bearing region and delivered without pressure, and that the removal of the fluid is carried out at least partly via the inside of the bearing mandrel.

2. Method according to claim 1, **characterised in that** the support is carried out in both the first and the second bearing region by means of an oil or oil-containing liquid as fluid.

3. Method according to one or both of the preceding claims, **characterised in that** the removal is carried out via the inside of the bearing mandrel and a removal conduit (45) which is connected to a container.

4. Method according to any one of the preceding claims, **characterised in that** the support in the first bearing region is provided by a plurality of bearing positions which are formed between bearing mandrel circumference and rotor bore hole, the rotor centre of gravity S lying in the axial direction outside the bearing region.

5. Method according to any one of the preceding claims, **characterised in that** the support in the second bearing region is provided via spherically formed bearing surfaces.

6. Bearing with a bearing mandrel (5) to support a journal-less rotor (2) having a bore hole (6) in a balancing device in at least a first in radial direction supporting hydrostatical bearing region and a second in axial direction supporting bearing region, the bearing mandrel (5) having first openings (10) for fluid to pass through and the first openings (10) being connected to delivery conduits (11) for the fluid, **characterised in that** in the bearing mandrel (5) second openings (20) which are connected to removal conduits (21, 31) for the fluid are provided and that the rotor (2) is supported hydrodynamically in the second bearing region, the second bearing being surrounded by a housing pot (43) which is adapted to collect a sufficient supply of removing fluid for hydrodynamic fluid lubrication of the second bearing region.

7. Bearing according to claim 6, **characterised in that** the first openings (10) on bearing mandrel circumferences are at least in the first and/or second bearing region.

8. Bearing according to one or both of claims 6 and 7, **characterised in that** the first openings (10) are in two axially separate bearing planes (7, 8) of the bearing mandrel (5).

9. Bearing according to any one of the claims 6 to 8, **characterised in that** the first openings (10) are provided both in two axially separate bearing planes (7, 8) of the first bearing region and in a bearing plane of the second bearing region, which is in the form of an axial bearing.

10. Bearing according to any one of the claims 6 to 9, **characterised in that** the second openings (20) are adjacent to the bearing planes (7, 8) and/or arranged therebetween.

11. Bearing according to any one of the claims 6 to 10, **characterised in that** the first (10) and second openings (20) are each connected to conduit portions (11", 21 ", 21''', 31'', 31''') which run transversely to the bearing mandrel axis and conduit portions (11', 21', 31') which run parallel to the bearing mandrel axis.

12. Bearing according to claim 11, **characterised in that** the conduit portions (11', 11''), which run transversely and/or parallel to the bearing mandrel axis, of the delivery conduits have choke portions with a small cross-section.

13. Bearing according to any one of the claims 6 to 12, **characterised in that** the conduit portions (11', 21', 31'), which run parallel to the bearing mandrel axis, of the delivery conduits (11) or removal conduits (21, 31) each open into a fluid chamber (15 resp. 16), which is arranged on the bearing mandrel end, for fluid delivery and fluid suction.

14. Bearing according to claim 13, **characterised in that** the two fluid chambers (15, 16) are formed by a central chamber and a coaxial ring chamber.

15. Bearing according to claim 14, **characterised in that** the fluid chambers (15, 16) are formed in a chamber component (14) which is sealedly connected to the bearing mandrel (5).

16. Bearing according to any one of the claims 6 to 15, **characterised in that** preferably four openings (10, 20) per plane, equidistantly distributed on the bearing mandrel circumference, are provided.

17. Bearing according to any one of the claims 6 to 16, **characterised in that** the bearing mandrel (5) is arranged vertically, and the rotor end which receives the bearing mandrel is supported via a spherically formed bearing position on the bearing mandrel (5) or a unit (40) which is connected thereto.

18. Bearing according to claim 17, **characterised in that** a bearing disc (46) is provided between the rotor end and bearing mandrel (5) or a unit (40) which is connected to the bearing mandrel, said bearing disc having one plane face and one face in the shape of a universal ball joint.

19. Bearing according to one or both of the preceding claims, **characterised in that** the rotor end region with the preferably spherically formed bearing position is surrounded by a housing pot (43) for backflow fluid.

20. Bearing according to claim 19, **characterised in that** the housing pot (43) is surrounded by another housing pot (42), and both are provided with removal conduits (4, 45), of which that of the inner housing pot (43) is connected to a fluid suction means via the openings (20) in the bearing mandrel (5).

## Revendications

1. Procédé d'équilibrage de rotors sans tourillon, dans lequel le rotor (2) muni d'un alésage (6) est disposé sur une broche (5) d'un dispositif d'équilibrage, et un fluide est introduit au moins en partie via l'intérieur de la broche entre les surfaces du rotor et de la broche qui se font face, et le rotor est mis en rotation, des vibrations de la broche (5) induites par un déséquilibre étant utilisées pour déterminer le déséquilibre, le rotor (2) est soutenu par un liquide dans une première section de palier en direction radiale et dans une deuxième section de palier en direction axiale et l'appui dans la première section de palier se fait de façon hydrostatique, **caractérisé en ce que** le rotor (1) est soutenu dans la deuxième section de palier de façon hydrodynamique au moyen du fluide évacué de la première section de palier et introduite sans pression, et **en ce que** l'évacuation du fluide est réalisée au moins partiellement via l'intérieur de la broche.

2. Procédé selon la revendication 1, **caractérisé en ce que** l'appui dans la première section et dans la deuxième section de palier est réalisé au moyen d'un liquide, de préférence un liquide huileux ou un liquide contenant de l'huile comme fluide.

3. Procédé selon l'une des revendications précédentes, **caractérisé en ce que** l'évacuation est réalisée via l'intérieur de la broche et une canalisation d'évacuation (45) reliée à un récipient.

4. Procédé selon l'une des revendications précédentes, **caractérisé en ce que** l'appui dans la première section de palier est réalisé par plusieurs points d'appui formés entre la surface périphérique de la broche et l'alésage du rotor, le centre de gravité (S) du rotor étant situé en direction axiale en-dehors de la section de palier.

5. Procédé selon l'une des revendications précédentes, **caractérisé en ce que** l'appui dans la deuxième section de palier est réalisé à l'aide de surface de palier de forme sphérique.

6. Logement avec une broche (5) pour loger, dans une installation d'équilibrage, un rotor (2) sans tourillon et présentant un alésage (6) dans au moins une première section de palier hydrostatique supportant en direction radiale et une deuxième section de palier supportant en direction axiale, la broche (5) présentant une première ouverture pour le passage de fluides, et la première ouverture (10) étant reliée avec des conduites d'alimentation (11) pour le fluide, **caractérisé en ce qu'**il est prévu dans la broche (5) des deuxièmes ouvertures (20) qui sont reliées à des canalisations d'évacuation (21, 31) pour le fluide, et **en ce que** le rotor (2) est soutenu dans la deuxième section de palier de façon hydrodynamique, la deuxième section de palier étant entourée d'un boîtier en forme de pot de boîtier (43) qui est disposé pour collecter une réserve en fluide refluant suffisante pour une lubrification par fluide hydrodynamique de la deuxième section de palier.

7. Palier selon la revendication 6, **caractérisé en ce que** les premières ouvertures (10) sur la surface périphérique de la broche sont situées au moins dans la première et/ou la deuxième section de palier.

8. Palier selon l'une des deux revendications 6 ou 7, **caractérisé en ce que** les premières ouvertures (10) sont situées dans deux plans d'appui (7, 8) de la broche (5) distants axialement l'un de l'autre.

9. Palier selon l'une des revendications 6 à 8, **caractérisé en ce que** les premières ouvertures (10) sont prévues non seulement dans deux plans d'appui (7, 8) de la première section de palier distants l'un de l'autre, mais également dans un plan d'appui de la deuxième section de palier conçue sous la forme d'un palier axial.

10. Palier selon l'une des revendications 6 à 9, **caractérisé en ce que** les deuxièmes ouvertures (20) sont disposées au voisinage des plans d'appui (7, 8) et/ou entre ceux-ci.

11. Palier selon l'une des revendications 6 à 10, **caractérisé en ce que** les premières (10) et les deuxièmes (20) ouvertures sont reliées chacune avec des sections de canalisation (11 ", 21 ", 21''', 31 ", 31''') s'étendant transversalement à l'axe de la broche et à des sections de canalisation (11', 21', 31') s'étendant parallèlement à l'axe de la broche.

12. Palier selon la revendication 11, **caractérisé en ce que** les sections de canalisation des canalisations d'alimentation s'étendant transversalement et/ou parallèlement à l'axe de la broche (11', 11 ") sont munies de section d'étranglement de petit diamètre.

13. Palier selon l'une des revendications 6 à 12, **caractérisé en ce que** les sections de canalisation (11', 21', 31') des canalisations d'alimentation (11) ou d'évacuation (21, 31) qui s'étendent parallèlement à l'axe de la broche débouchent chacune dans une chambre de fluide (15 ou 16) disposée à l'extrémité de la broche pour l'alimentation ou l'évacuation en fluide.

14. Palier selon la revendication 13, **caractérisé en ce que** les deux chambres de fluide (15, 16) sont formées par une chambre centrale et une chambre annulaire coaxiale.

15. Palier selon la revendication 14, **caractérisé en ce que** les chambres de fluide (15, 16) sont formées dans une pièce de chambre (16) reliée à la broche (5).

16. Palier selon l'une des revendications 6 à 15, **caractérisé en ce qu'**il est prévu de préférence quatre ouvertures (10, 20) par plan réparties de façon équidistante sur la périphérie de la broche.

17. Palier selon l'une des revendications 6 à 16, **caractérisé en ce que** la broche (6) est disposée verticalement et l'extrémité du rotor recevant la broche (5) s'appuie sur la broche (5) via un point d'appui de forme sphérique ou via une unité (40) reliée à celle-ci.

18. Palier selon la revendication 17, **caractérisé en ce qu'**il est prévu une rondelle de palier (46) entre l'extrémité du rotor et la broche (5) ou une unité (40) reliée à la broche, qui présente une surface frontale plane et une en forme de calotte sphérique.

19. Palier selon l'une ou les deux des revendications précédentes, **caractérisé en ce que** la section du rotor avec le point d'appui conçue de préférence en forme sphérique est entourée d'un boîtier en forme de pot (43) pour le fluide refluant.

20. Palier selon la revendication 19, **caractérisé en ce que** le boîtier en forme de pot (43) est entouré par un autre boîtier en forme de pot (42) et les deux sont munis de conduites d'évacuation (44, 45), la conduite d'évacuation du boîtier en forme de pot intérieur (43) étant reliée à une aspiration de fluide via les ouvertures (20) dans la broche (5).
